# FASCICULE DE BREVET EUROPEEN

(11) **EP 3 220 328 B1**
(45) Date de publication et mention de la délivrance du brevet: **30.01.2019**
(21) Numéro de dépôt: 17157712.5
(22) Date de dépôt: 23.02.2017
(51) Int. Cl.: G06Q 10/08

(54) **SYSTÈME D'ACHEMINEMENT D'OBJETS PAR DES INDIVIDUS D'UNE COMMUNAUTÉ, UTILISANT UN SIGNAL DE PRISE EN RESPONSABILITÉ DE L'EMBALLAGE PAR UN INDIVIDU**
SYSTEM ZUM TRANSPORTIEREN VON GEGENSTÄNDEN DURCH PERSONEN EINER GEMEINSCHAFT MITTELS BENUTZUNG EINES SIGNALS BEI DER ÜBERNAHME DER VERANWORTUNG FÜR DIE PACKUNG DURCH EINE PERSON
SYSTEM FOR CONVEYING ITEMS BY MEANS OF INDIVIDUALS OF A COMMUNITY, USING A SIGNAL OF TAKING THE RESPONSABILITY FOR THE PACKAGE BY AN INDIVIDUAL

(30) Priorité: 16.03.2016 FR 1652216; 22.04.2016 FR 1653572
(43) Date de publication de la demande: 20.09.2017
(73) Titulaire: PA.COTTE SA, 1009 Pully (CH)
(72) Inventeur: COTTE, Pierre-Alain, 92224 Amberg (DE); GAUSSIN, Laurent, 44310 La Limouzinière (FR)
(74) Mandataire: reuteler & cie SA

(56) Documents cités:
- US-A1- 2013 342 394

## Description

Le domaine de l'invention est celui de la logistique. Plus précisément, l'invention concerne l'acheminement d'objets, et plus particulièrement d'objets dont les dimensions et le poids permettent leur acheminement par toute personne et par tout moyen ou quasiment.

A ce titre, l'invention concerne un système d'acheminement d'objets dont le poids n'excède pas 8 kg ou, de façon plus générale, dont les dimensions et le poids correspondent à la définition d'un bagage à mains pour les compagnies aériennes. Bien entendu, l'invention s'applique également à des objets de dimensions et/ou de poids inférieurs, pouvant aller jusqu'à l'expédition de simples plis.

Dans le domaine de l'invention, certains prestataires d'achats et de vente en ligne de produits ont généré des attentes considérables en matière de livraison desdits produits partout dans le monde.

Cependant, à l'échelle internationale, les livraisons express, en quelques heures, sont compliquées voire impossibles et sont, à tout le moins, très lentes et/ou très coûteuses. Il existe donc des facteurs très limitant pour le commerce international et les livraisons privées, ceci alors que le commerce par internet ne connaît pas de frontière. Il en résulte que les livraisons express internationales ne constituent qu'un marché extrêmement réduit, ceci en dépit des revenus colossaux que connaissent certaines compagnies de livraisons internationales.

Ce constat est lié au fait que tous les systèmes logistiques de livraison actuels sont basés sur une approche de contrôle centralisé reposant notamment sur :
- le regroupement des marchandises à acheminer ;
- le transport en masse ;
- l'envoi par colis.

De plus, l'analyse des pratiques classiques conduit à constater que :
- les courriers locaux sont limités à des livraisons limitées sur des zones géographiques relativement réduites, voire locales (l'adoption des modèles de commerce consistant à mettre des ressources à disposition des utilisateurs par des acteurs différents des professionnels classiques tendant pourtant à générer des possibilités nouvelles et importantes) ;
- les livraisons nationales (plus ou moins monopolistiques) fonctionnement parfaitement, dans des délais avoisinants les 24 heures, mais ce marché est par définition limité à un seul pays ;
- les livraisons internationales restent des marchés de niche, qui favorisent le développement de compagnies de livraisons spécialisées à l'international, dans des délais et des coûts parfois incompatibles voire inacceptables.

Il existe donc actuellement une attente, implicite ou explicite, s'agissant de l'expédition et de la livraison de biens dans des délais réduits par rapport à la pratique courante, ceci pour des montants de prestation peu élevés, voire à bas coût.

Or, une voie pour satisfaire cette attente réside dans une approche communautaire et/ou collaborative, dans la mesure où chacun évolue dans un univers à l'intérieur duquel une grande proportion d'individus procurent ensemble des possibilités multiples de déplacements.

Il est donc envisageable selon cette approche de faire partir un objet d'un point de départ en le confiant à l'un des individus d'un système collaboratif et de l'acheminer à un point d'arrivée par l'intermédiaire de cet individu seul ou en relais avec un ou plusieurs autres individus du système collaboratif.

Bien entendu, dans un tel système, il est primordial de pouvoir identifier l'individu de la communauté ayant transitoirement la responsabilité de la prise en charge de l'emballage.

En outre, il est aussi nécessaire de connaître en temps réel la position de l'objet à acheminer, pour le situer vis-à-vis de son point d'arrivée et/ou vis-à-vis des individus participant au système collaboratif.

Dans ce contexte, il est prévisible pour suivre les déplacements des objets à acheminer, de les équiper de moyens de géolocalisation et de moyens de communication leur permettant d'émettre des données relatives à leur localisation. On obtient de cette façon un système de traçabilité du cheminement des objets.

A titre d'exemple, US2013/0342394 propose une solution de suivi par GPS et GSM de petits actifs à forte valeur ajoutée notamment des pierres précieuses, des bijoux ou tout autre article de luxe. Cette solution requiert un composant d'emballage, une charge par induction, transmission d'informations (de préférence via un réseau cellulaire local), ainsi qu'une base de données accessible par internet et un site Web avec lesquels les utilisateurs peuvent suivre à distance les marchandises.

Toutefois, une telle solution engendre un problème technique s'agissant de l'alimentation électrique des moyens de géolocalisation et de communication. Il faut en effet prévoir en outre un système de rechargement en électricité des moyens d'alimentation dédiés à la géolocalisation de l'objet, ce qui implique des contraintes difficilement gérables, s'agissant de reporter sur les individus du système collaboratif la charge du suivi du rechargement électrique des moyens en question.

L'invention a notamment pour objectif de s'inscrire dans une approche logistique collaborative qui permette une déclaration de prise en charge et de responsabilité d'un objet à acheminer par un individu, et un suivi des prises en charge.

L'invention a aussi pour objectif de fournir une telle approche logistique collaborative qui soit simple et pratique d'utilisation pour les individus qui y participent.

Un autre objectif de l'invention est de fournir une telle approche logistique collaborative qui n'implique pas ou peu de contrainte au niveau des individus participant à l'acheminement des objets, s'agissant notamment de la gestion du niveau de rechargement électrique des moyens techniques couplés aux objets à acheminer et impliqués dans la traçabilité spatio-temporelle des objets.

L'invention a également pour objectif de fournir un système d'acheminement d'objets global, mettant en oeuvre un tel système de traçabilité.

L'invention a de plus pour objectif de fournir un tel système d'acheminement d'objets qui assure un service rapide et peu coûteux pour les expéditeurs d'objets.

Ces objectifs ainsi que d'autres qui apparaîtront par la suite, sont atteints grâce à l'invention qui a pour objet un système d'acheminement d'objets tel que défini dans la revendication indépendante 1.

Ainsi, grâce à l'invention, le système d'acheminement d'objets assure une traçabilité des prises en charge (et en responsabilité) des objets par la ou les différentes personnes intervenant dans l'acheminement.

On peut de cette façon identifier la personne ayant la responsabilité de l'objet en cas de besoin, notamment pour la joindre en vue de transmettre ou d'obtenir des informations sur l'acheminement en cours.

Par ailleurs, on obtient avec un système selon l'invention un processus qui sécurise l'acheminement, ce qui permet d'assurer un fonctionnement fiable aux utilisateurs qui envoient des objets par le système d'acheminement selon l'invention.

Selon une solution avantageuse, les unités informatiques appartiennent au groupe suivant :
- ordiphones
- ordinateur ou tablette informatique.

Avec un tel système collaboratif, on obtient la possibilité de réunir dans une même communauté un nombre d'individus très important, les téléphones portables intelligents étant aujourd'hui répandus avec une couverture de la population très importante.

En outre, par définition, ces téléphones portables sont portés par les individus. Il en résulte que lorsqu'un individu de la communauté porte un objet à acheminer, le dispositif embarqué est en permanence à proximité du téléphone portable de l'individu en question, permettant de communiquer avec celui-ci et d'utiliser ses ressources de géolocalisation en permanence ou quasiment.

Selon une solution préférentielle, la base de données relative aux emballages comprend, pour chaque emballage une information d'horodatage d'une mise à jour du code de responsabilité.

Ainsi, on obtient des données supplémentaires sur l'acheminement, s'agissant non seulement de savoir qui a la responsabilité d'un objet, mais aussi à quelle moment la responsabilité de l'objet est prise et pendant combien de temps.

En outre, la plateforme informatique est avantageusement paramétrée pour recevoir le code d'identification de l'individu receveur ayant émis un signal d'acceptation, et pour mettre à jour le code de responsabilité avec ledit code d'identification de l'individu receveur.

Préférentiellement, les emballages comprennent chacun un registre informatique et la plateforme informatique est paramétrée pour mettre à jour le registre informatique pour constituer un historique des codes de responsabilité associés au code de reconnaissance de l'emballage.

L'invention concerne également un procédé de suivi de prise en responsabilité tel que défini dans la revendication indépendante 6.

D'autres caractéristiques et avantages de l'invention apparaîtront plus clairement à la lecture de la description suivante d'un mode de réalisation préférentiel de l'invention, donné à titre de simple exemple illustratif et non limitatif, et des dessins annexés parmi lesquels :
- la figure 1 illustre schématiquement un système d'acheminement d'objets selon l'invention ;
- la figure 2 illustre schématique le processus de transfert de responsabilité dans un système d'acheminement d'objets selon l'invention ;
- la figure 3 procure une illustration schématique d'un contenant susceptible d'être utilisé pour acheminer un objet, et de son environnement dans un système d'acheminement d'objets selon l'invention.

Tel qu'indiqué précédemment, le principe de l'invention est de proposer un système d'acheminement d'objets de type collaboratif, c'est-à-dire mis en oeuvre par un ensemble d'individus d'une communauté, ledit système mettant en oeuvre un système de traçabilité spatio-temporelle.

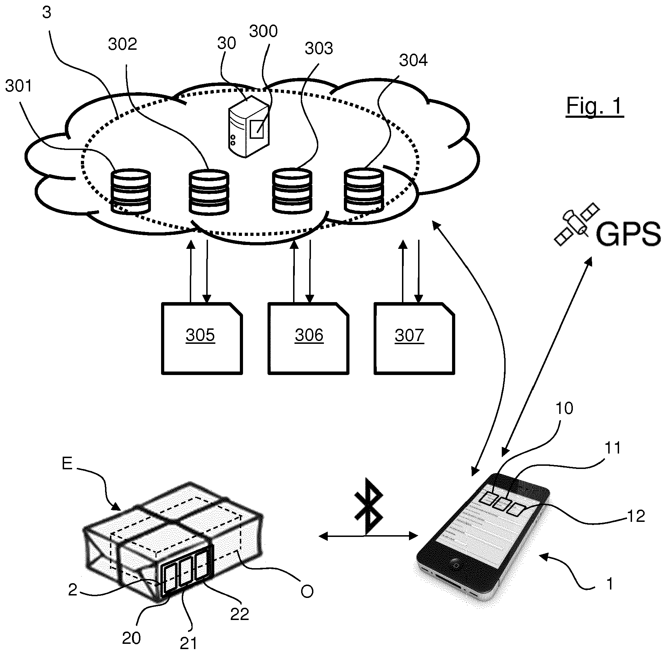

Tel qu'illustré par les figures 1 à 3, un tel système est du type comprenant :
- des unités informatiques 1 détenues par des individus I d'une communauté ;
- une plateforme informatique 3 incluant une application informatique destinée à être chargée par les unités informatiques portables ;
- des dispositifs embarqués 2 dans des emballages E portant chacun au moins un code reconnaissance 31 et destinés à contenir les objets O à acheminer, ces emballages pouvant être tout contenant (enveloppe, colis, paquet...) de formes et dimensions adaptées à l'objet à acheminer, (les dimensions du contenant et le poids global du contenant ajouté à celui du contenu étant de préférence, mais non exclusivement, adaptés aux critères définis pour les bagages à mains selon les critères des compagnies aériennes).

La plateforme informatique 3 comprend un serveur 30 accessible à distance et paramétré pour recevoir des données d'acheminement d'un objet d'un point de départ à un point d'arrivée. Le mode de saisie du point de départ et du point d'arrivée est décrit plus en détails par la suite.

Par ailleurs, le serveur héberge une première base de données 303 concernant les individus « clients » et les objets à acheminer parmi lesquelles :
- un code d'identification de l'individu ;
- des informations caractérisant en poids et en dimension et un objet à acheminer ;
- une date de départ à partir d'un lieu géo-localisé ;
- une date de livraison à partir d'un lieu géo-localisé.

Le serveur héberge également une deuxième base de données 302 concernant les individus « voyageurs » de la communauté et leurs unités informatiques portables, parmi lesquelles (outre l'identité des individus) :
- un code d'identification de l'individu ;
- une date de départ de l'individu ;
- un lieu de départ de l'individu ;
- une date d'arrivée de l'individu ;
- un lieu d'arrivée de l'individu.

On note que chaque dispositif embarqué est identifiable par un code numérique d'identification, le serveur 30 hébergeant une base de données 301 relative aux emballages, cette base de données listant :
- les codes de reconnaissance 31 des emballages ;
- des codes numériques d'identification 32 de chaque dispositif embarqués.

Le serveur héberge également une troisième base de données 304 concernant les individus « dépositaires » de la communauté et leurs unités informatiques portables et/ou leur ordinateur, parmi lesquelles (outre leur identité) :
- un code d'identification de l'individu ;
- leur position géographique ;
- le nombre d'emballage(s) (avec dispositif embarqué) disponible(s) dont ils disposent.

Les bases de données 302, 303 et 304 peuvent être dissociées ou être regroupées au sein d'une base de données globale. Chacune d'elles est susceptible de recevoir des données en liaison avec les applications informatiques dédiées au profil utilisateur, en l'occurrence respectivement à l'application informatique « voyageur » 305, à l'application informatique « clients » 306 et l'application informatique « dépositaires » 307.

Ainsi, chaque individu est susceptible de s'identifier auprès de la plateforme informatique en transmettant son code d'identification par l'intermédiaire de l'application informatique contenue dans l'unité informatique que l'individu détient.

On note en outre que la plateforme informatique comprend des moyens de connexion et de communication avec les interfaces utilisateurs paramétrées pour transmettre à la plateforme informatique des requêtes d'acheminement d'objets.

En pratique, ces interfaces sont constituées par des ordiphones, ou par des ordinateurs ou des tablettes informatiques (dans le cas par exemple des individus « dépositaires » de la communauté), sur lesquels a été chargée une application informatique dédiée.

Selon le principe de l'invention le système d'acheminement est implémenté d'un système de transfert de responsabilité, visant à assurer une traçabilité des prises en charges successives du ou des emballages équipés des dispositifs embarqués décrits précédemment.

Tel qu'indiqué précédemment, ce système de transfert de responsabilité prévoit que le serveur de la plateforme informatique du système comprend une base de données incluant des données d'identification et de suivi de chaque dispositif embarqué, ainsi qu'un code de reconnaissance de chaque emballage. Plus précisément, les données d'identification peuvent comprendre, d'une part, le numéro Bluetooth du module informatique et, d'autre part, un numéro de voyage, défini par le serveur de la plateforme informatique et affecté au dispositif embarqué en couplant le numéro Bluetooth et le numéro de voyage. Cette affectation est réalisé en pratique au moment où l'objet est inséré dans l'emballage, la personne réalisant cette opération se connectant au serveur et reliant le dossier numérique du cheminement à réaliser (demandé et enregistré par l'émetteur de l'objet) à un code visuel (numéro ou QR code, ou autre) porté par l'emballage (tous les emballages, et donc tous les numéros Bluetooth, avec les codes visuels correspondants étant connus du serveur).

Un champ « code de responsabilité » 33, destiné à identifier l'individu transitoirement en charge de l'emballage E, est également associé à chaque emballage, en complément du code de reconnaissance 31 et éventuellement des codes numériques d'identification 32 et de suivi du dispositif embarqué.

En outre, la base de données relative aux emballages comprend, pour chaque emballage une information d'horodatage 34 d'une mise à jour du code de responsabilité.

Ainsi, le système de système de transfert de responsabilité est programmé pour exécuter les étapes suivantes (par le serveur de la plateforme informatique du système) :
- association, dans le champ code de responsabilité 33, de l'identité (fournie par le code d'identification de l'individu) de la personne prenant en charge l'emballage (et l'objet qu'il contient) à la liste des données d'identification et de suivi du dispositif embarqué dans l'emballage, avec horodatage de cette association ;
- envoi, à une nouvelle personne sur le point de prendre en charge l'emballage, d'une requête d'acceptation émise par la personne sur le point de transmettre l'emballage, par l'intermédiaire de la plateforme du système ;
- réception de l'acceptation émise par la personne prenant en charge l'emballage ;
- modification, dans le champ code de responsabilité 33, de l'identité de la personne prenant en charge l'emballage (et l'objet qu'il contient), avec horodatage de cette modification.

On note que les étapes qui viennent d'être décrites supposent que les deux personnes, celle qui cède la prise en charge et celle qui l'accepte, aient une connexion au serveur de la plateforme informatique.

Il est toutefois envisageable, dans le cas où l'une des personnes, voire les deux personnes, ne disposent pas de connexion au serveur, de modifier et de stocker provisoirement le changement d'information relative à la personne en charge de l'emballage, l'information étant transmise au serveur par l'ordiphone correspondant (ou l'ordinateur correspondant) dès que la connexion est retrouvée (voire par l'ordiphone d'une tierce personne).

De façon générale, on comprend donc que la plateforme est paramétrée pour recevoir un signal de prise en responsabilité de l'individu transitoirement en charge de l'emballage par l'intermédiaire de l'application informatique contenue dans l'unité informatique que ledit individu détient, et pour modifier en conséquence le code de responsabilité associé au code de reconnaissance de l'emballage.

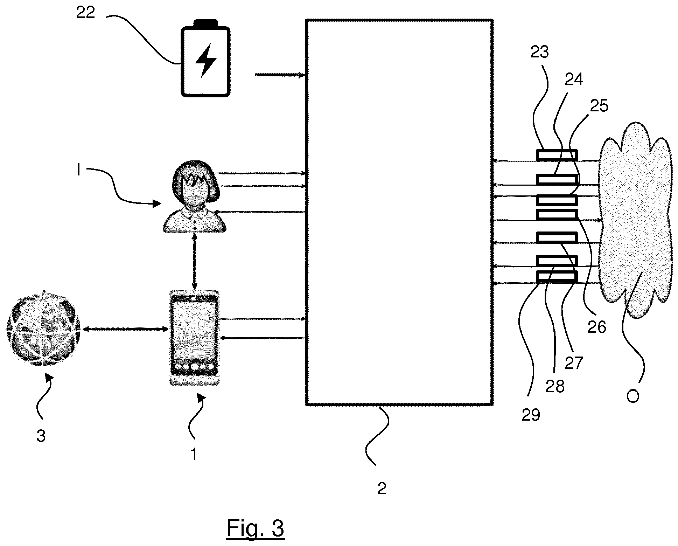

En référence à la figure 3, le processus de transfert de responsabilité s'opère de la façon décrite ci-après.

Un individu (dit individu transmetteur IT), sur le point de transmettre un objet (dans son emballage E) à un autre individu (dit individu receveur IR), active sur son unité informatique 1 (ordiphone ou autre) l'application informatique autorisant l'échange de données entre la plateforme informatique 3 et l'unité informatique qu'il détient.

A l'aide de l'application informatique, l'individu transmetteur IT envoie à la plateforme informatique 3 une requête de transfert de responsabilité (la plateforme informatique étant paramétrée pour recevoir cette requête de transfert de responsabilité par l'intermédiaire de l'application informatique contenue dans l'unité informatique que l'individu transmetteur détient).

L'individu transmetteur IT envoie, avec la requête de transfert de responsabilité, le code d'identification de l'individu receveur IR (la plateforme informatique étant paramétrée pour recevoir et stocker le code d'identification de l'individu receveur) à qui l'individu transmetteur IT est sur le point de confier l'objet à acheminer. Cela permet à la plateforme informatique 3 d'émettre une requête d'acceptation à un individu receveur par l'intermédiaire de l'application informatique contenue dans l'unité informatique 1 que l'individu receveur IR détient.

En retour, l'individu receveur IR émet un signal d'acceptation par l'intermédiaire de l'application informatique contenue dans son unité informatique (la plateforme étant paramétrée pour recevoir un signal d'acceptation de la part de l'individu receveur par l'intermédiaire de l'application informatique contenue dans l'unité informatique que l'individu receveur détient). Le signal d'acceptation émis par l'intermédiaire de l'application informatique contient le code d'identification de l'individu receveur (la plateforme informatique étant paramétrée pour recevoir le code d'identification de l'individu receveur ayant émis un signal d'acceptation).

Alors, le code de responsabilité associé à l'emballage est mis à jour avec le code d'identification de l'individu receveur (la plateforme informatique étant paramétrée pour mettre à jour le code de responsabilité avec le code d'identification de l'individu receveur).

De plus, la plateforme informatique enregistre l'heure et la date du signal d'acceptation dans l'information d'horodatage 34.

Ce processus est bien entendu reproduit à chaque transfert de l'emballage d'un individu à un autre.

On note que par « mise à jour » du code responsabilité, on entend éventuellement la mise à jour de l'historique des codes de responsabilité successivement enregistrés.

A ce titre, les emballages comprennent chacun un registre informatique 35. Parallèlement, la plateforme informatique est paramétrée pour mettre à jour le registre informatique 35 de chaque emballage E avec les codes de responsabilité successifs et les informations d'horodatage liées aux transferts de responsabilité. Ainsi, un historique des codes de responsabilité associés au code de reconnaissance de l'emballage est constitué.

Selon un mode de réalisation particulier et préférentiel, les unités informatiques portables sont constituées par des ordiphones d'un type courant répandu, et comprenant notamment des premiers moyens de communication 10 de proximité sans fil et des moyens de géolocalisation 11.

Selon une caractéristique de l'invention, le système d'acheminement met en oeuvre un système de traçabilité des objets comprenant la plateforme informatique 3, et reposant notamment sur l'utilisation des dispositifs embarqués 2 comprenant quant à eux des deuxièmes moyens de communication 20 de proximité sans fil, aptes à communiquer avec les premiers moyens de communication 10 de proximité sans fil. De plus, ces dispositifs embarqués comprennent au moins un module informatique 21 de traitement apte à coopérer avec les deuxièmes moyens de communication 20 de proximité sans fil pour récupérer et traiter des données fournies par ces deuxièmes moyens de communication.

Bien entendu, les dispositifs embarqués pourront comprendre bien d'autres moyens structurels et fonctionnels, évoqués par la suite.

Selon l'invention, le module informatique 21 des dispositifs embarqués et des unités informatiques 1 comprennent en commun une application informatique autorisant l'échange de données entre eux. Cette application informatique est paramétrée pour ouvrir un canal de communication destiné à permettre l'accès et l'utilisation des moyens de géolocalisation 11 des unités informatiques par le module informatique 21 des dispositifs embarqués 2. En d'autres termes, les modules informatiques intègrent l'application informatique, celle-ci pouvant également être chargée, à partir de la plateforme informatique, sur les unités informatiques détenues par les individus de la communauté. Une fois le lien établi entre le dispositif embarqué et l'unité informatique, l'application informatique (commune au dispositif embarqué et à l'unité informatique) ouvre un canal de communication par l'intermédiaire des premiers et deuxièmes moyens de communication de proximité sans fil, et autorise l'accès et l'utilisation, par le dispositif embarqué, des moyens de géolocalisation de l'unité informatique.

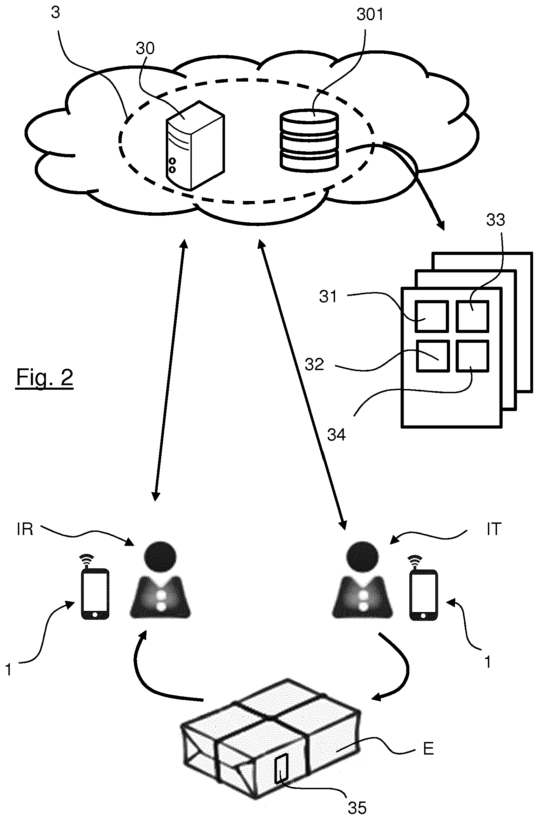

Ainsi, comme illustré par les figures 1 et 2, le module informatique des dispositifs embarqués utilisent comme ressources dédiées à la traçabilité, et donc à la géolocalisation, celles des unités informatiques portables (donc en l'occurrence celles de l'ordiphone détenu par l'individu acheminant l'objet), ceci tout au long du déplacement effectué par l'individu. Bien entendu, le système de traçabilité s'applique également au cas où plusieurs individus se relaient pour acheminer l'objet, le dispositif embarqué communicant alors successivement avec chaque unité informatique portable des individus.

Comme cela va être expliqué plus en détails par la suite, la géolocalisation de l'objet peut être également obtenu par l'intermédiaire d'une unité informatique portable détenu par un dépositaire de l'objet, l'objet étant alors en attente éventuelle de prélèvement par un individu en déplacement.

Selon une solution avantageuse, les premiers moyens de communication de proximité sans fil et les deuxièmes moyens de communication de proximité sans fil échangent des données par Bluetooth (ou par wifi selon un autre mode de réalisation envisageable).

Les deuxièmes moyens de communication de proximité sans fil et le module informatique de traitement des dispositifs embarqués sont alimentés par une simple batterie non rechargeable 22.

On note que les dispositifs embarqués pourront répondre à d'autres moyens structurels et/ou fonctionnels alimentés, de façon périodique ou continue par la batterie du dispositif, et notamment :
- moyens de détection de choc 23
- capteur de température 24 ;
- capteur d'humidité 25 ;
- moyen d'éclairage 26 ;
- moyen de capture vidéo 27 ;
- moyens de mesure du poids 28 :
- moyens de détection d'ouverture/fermeture 29 ;

Tel que cela apparaît sur la figure 1, le système d'acheminement d'objets comprend une plateforme informatique 3 de gestion des acheminements d'objets, incluant les premiers moyens de communication longue distance destinés à communiquer avec des deuxièmes moyens de communication longue distance intégrés aux unités informatiques portables.

Le serveur 30 de la plateforme informatique comprend en outre des moyens de stockage 300 de données de géolocalisation transmises à la plateforme informatique par les unités portables.

Le système de traçabilité des objets à acheminer n'est donc pas restreint au stockage local des données de géolocalisation transmises par les unités informatiques portables au sein du module informatique des dispositifs embarqués. Au contraire, outre les ressources de géolocalisation des unités informatiques portables utilisées par les dispositifs embarqués, ces derniers utilisent également les moyens de communication longue distance des unités informatiques portables pour échanger avec la plateforme informatique de gestion.

Le processus d'acheminement des objets et d'interaction entre les individus dans un système d'acheminement selon l'invention va être maintenant décrit.

Selon un premier exemple d'acheminement, un objet est acheminé d'un lieu dépositaire à un autre lieu dépositaire, l'utilisateur du service émetteur de l'objet devant alors se rendre au premier lieu dépositaire pour déposer l'objet à acheminer et l'individu destinataire devra se rendre au deuxième lieu dépositaire pour prélever l'objet acheminé.

Selon ce processus, l'utilisateur ayant un objet à acheminer se connecte à la plateforme informatique du système pour accéder à l'interface utilisateur lui permettant de saisir :
- une date de départ, à partir d'un lieu géo-localisé (dans la mesure où l'utilisateur connait le lieu dépositaire le plus proche, faute de quoi la plateforme informatique peut définir ce lieu dépositaire en fonction de la géolocalisation de l'utilisateur, par exemple en fonction de son lieu de travail ou de son domicile) ;
- une date de livraison et un lieu géo-localisé (pouvant prendre la forme d'une adresse de destination) ;
- le poids et/ou les dimensions de l'objet ;
- éventuellement, un moyen de paiement.

En fonction des moyens de géolocalisation de départ saisis, la plateforme informatique réserve un paquet d'expédition pourvu d'un dispositif embarqué tel que décrit précédemment, et signaler cette réservation au lieu dépositaire. Si aucun paquet d'expédition n'est disponible sur le lieu dépositaire défini, la plateforme informatique assure un service d'envoi d'un paquet d'expédition au lieu dépositaire défini.

L'utilisateur se rend sur le premier lieu dépositaire avec son objet à acheminer. A l'aide d'une application informatique dédiée chargée sur l'ordiphone de l'utilisateur, celui-ci transmet au dépositaire, qui dispose de la même application informatique sur son ordiphone (ou sur un ordinateur), des données relatives à l'objet et à son acheminement. A l'aide de ces données d'identification, le dépositaire identifie le paquet d'expédition affecté à l'objet à acheminer (la plateforme informatique du service ayant choisi un code numérique d'identification spécifique du dispositif embarqué intégré au paquet d'expédition).

Le dépositaire dispose l'objet à acheminer dans le paquet d'expédition identifié. L'utilisateur valide, par l'intermédiaire de son application dédiée, la remise au dépositaire, ce dernier acceptant numériquement cette remise, le rendant alors responsable de l'objet et du paquet d'expédition.

On note à ce stade que le dispositif embarqué du paquet d'expédition commence à communiquer, par les moyens de communication de proximité sans fil, avec l'ordiphone du dépositaire pour accéder aux ressources de géolocalisation de cet ordiphone.

En parallèle, une communauté d'individus se déclare à la plateforme informatique de gestion du système, et qui saisissent notamment :
- une date de départ ;
- un lieu de départ ;
- une date d'arrivée ;
- un lieu d'arrivée.

Avec les données utilisateurs, et les données sur les individus de la communauté et sur leur déplacement, le serveur de la plateforme informatique constitue deux bases de données, à savoir une base de données concernant les objets à acheminer et une base de données concernant les unités portables détenues par les individus, avec les données relatives au déplacement des individus.

Le système de gestion compare en temps réel les données relatives au paquet d'expédition présent dans les lieux dépositaires et prêt à être expédié, avec la base de données relative aux individus de la communauté et à leur déplacement. Cette comparaison conduit la plateforme informatique à choisir un individu pour sa présence à proximité du lieu dépositaire de départ et pour sa destination à proximité du lieu dépositaire d'arrivée. Une alerte est envoyée par exemple par SMS sur l'ordiphone de l'individu voyageur lui indiquant le moment et le lieu où il doit se rendre pour prélever le paquet d'expédition incluant l'objet à acheminer.

Sur le lieu dépositaire de départ, le voyageur s'identifie auprès du dépositaire à l'aide de l'application informatique chargée sur son ordiphone, et transmet au dépositaire l'identification du paquet d'expédition qu'il vient de prélever.

Par le système informatique, le dépositaire valide la remise du paquet d'expédition à un individu voyageur, ce qui conduit à :
- déconnecter l'ordiphone du dépositaire du dispositif embarqué dans le paquet ;
- connecter le dispositif embarqué dans le paquet d'expédition à l'ordiphone de l'individu voyageur.

L'individu voyageur se rend au deuxième lieu dépositaire, à savoir sur le lieu dépositaire d'arrivée. Pendant le voyage, le dispositif embarqué dans le paquet d'expédition est en permanence connecté avec l'ordiphone de l'individu voyageur, assurant un suivi et une géolocalisation de l'objet acheminé, ces données pouvant être transmises périodiquement à la plateforme informatique de façon à être accessibles pour l'utilisateur et l'expéditeur.

Sur le lieu dépositaire d'arrivée, l'individu voyageur remet le paquet d'expédition au dépositaire, ceci en indiquant par informatique l'identification du paquet et d'expédition au dépositaire, ce dernier validant en informatique la prise en charge du paquet d'expédition, ce qui conduit à :
- déconnecter le dispositif embarqué du paquet d'expédition de l'ordiphone de l'individu voyageur ;
- connecter le dispositif embarqué du paquet d'expédition à l'ordiphone du dépositaire.

L'acceptation de la prise en charge du paquet d'expédition par le dépositaire d'arrivée est signalée en informatique à la plateforme informatique de gestion du système, qui envoie un signal d'alerte par SMS à l'utilisateur destinataire, en lui transmettant les données de géolocalisation du lieu dépositaire d'arrivée.

L'individu destinataire se rend sur le lieu dépositaire d'arrivée et s'identifie auprès du dépositaire par l'intermédiaire de l'application informatique chargée au préalable sur son ordiphone.

Le dépositaire vérifie en informatique l'identité de l'individu destinataire et valide la remise à cet individu du paquet d'expédition, ce qui le conduit à :
- déconnecter le dispositif embarqué du paquet de l'ordiphone du dépositaire ;
- connecter le dispositif embarqué du paquet d'expédition à l'ordiphone de l'individu destinataire.

L'utilisateur destinataire valide en informatique la réception du paquet d'expédition, cette validation étant transmise à la plateforme informatique de gestion du système qui informe par SMS l'utilisateur expéditeur.

Bien entendu, le système d'acheminement de dépositaire et dépositaire qui vient d'être décrit peut être enrichi en amont et en aval, par l'intermédiaire de l'intervention d'un individu voyageur assurant l'acheminement du paquet d'expédition entre l'individu expéditeur et le lieu dépositaire de départ, et par l'intervention d'un individu voyageur pouvant, à l'autre extrémité de l'acheminement, assurer le déplacement du paquet d'expédition du lieu dépositaire d'arrivée à l'individu destinataire.

## Revendications

1. Système d'acheminement d'objets par des individus d'une communauté, mettant en oeuvre :
- des emballages (E) destinés à contenir les objets et portant au moins un code de reconnaissance (31),
- des dispositifs embarqués (2) dans les emballages, chaque dispositif embarqué étant identifiable par un code numérique d'identification (32) ;
- une plateforme informatique (3) incluant au moins une application informatique destinée à être chargée par des unités informatiques (1) détenues par les individus de la communauté, et incluant :
- au moins une base de données (302) des individus de la communauté listant au moins un code d'identification de chaque individu, un individu étant susceptible de s'identifier auprès de la plateforme informatique (3) en transmettant son code d'identification par l'intermédiaire de l'application informatique contenue dans l'unité informatique (1) que ledit individu détient,
- au moins une base de données (301) relative aux emballages listant les codes de reconnaissance de tous les emballages et les codes numériques d'identification (32) de tous les dispositifs embarqués (2), et comprenant, pour chaque emballage, un champ code de responsabilité (33) destiné à associer le code d'identification de l'individu transitoirement en charge de l'emballage au code numérique d'identification du dispositif embarqué dans l'emballage ;
la plateforme informatique (3) étant paramétrée pour :
- recevoir une requête de transfert de responsabilité d'un individu transmetteur (IT) ainsi que le code d'identification de l'individu receveur (IR) par l'intermédiaire de l'application informatique contenue dans l'unité informatique que ledit individu transmetteur (IT) détient ;
- émettre une requête d'acceptation à l'individu receveur (IR) par l'intermédiaire de l'application informatique contenue dans l'unité informatique (1) que ledit individu receveur (IR) détient ; et
- recevoir un signal d'acceptation de la part de l'individu receveur (IR) par l'intermédiaire de l'application informatique contenue dans l'unité informatique que ledit individu receveur (IR) détient, et pour modifier en conséquence, avec le code d'identification dudit individu receveur (IR), le champ code de responsabilité (33) associé au code de reconnaissance (31) de l'emballage.

2. Système selon la revendication 1, **caractérisé en ce que** les unités informatiques (1) appartiennent au groupe suivant :
- ordiphones
- ordinateur ou tablette informatique.

3. Système selon la revendication 1, **caractérisé en ce que** la base de données (301) relative aux emballages comprend, pour chaque emballage une information d'horodatage (34) d'une mise à jour du code de responsabilité (33).

4. Système selon la revendication 1, **caractérisé en ce que** la plateforme informatique (3) est paramétrée pour recevoir le code d'identification de l'individu receveur (IR) ayant émis un signal d'acceptation, et pour mettre à jour le code de responsabilité (33) avec ledit code d'identification de l'individu receveur.

5. Système selon la revendication 3, **caractérisé en ce que** les emballages (E) comprennent chacun un registre informatique (35) et **en ce que** la plateforme informatique (3) est paramétrée pour mettre à jour le registre informatique pour constituer un historique des codes de responsabilité (33) associés au code de reconnaissance (31) de l'emballage.

6. Procédé de suivi de prise en responsabilité d'un objet acheminé à l'aide d'un système selon l'une quelconque des revendications 1 à 5, **caractérisé en ce qu'**il comprend les étapes suivantes :
- activation de l'application informatique autorisant l'échange de données entre la plateforme informatique (3) et une unité informatique (1) détenue par un individu ;
- réception d'une requête de transfert de responsabilité d'un individu transmetteur (IT) par l'intermédiaire de l'application informatique contenue dans l'unité informatique (1) que ledit individu transmetteur détient, à un individu receveur (IR) par l'intermédiaire de l'application informatique contenue dans l'unité informatique (1) que ledit individu receveur détient ;
- émission d'une requête d'acceptation à l'individu receveur (IR) par l'intermédiaire de l'application informatique contenue dans l'unité informatique (1) que ledit individu receveur (IR) détient, et
- réception d'un signal d'acceptation de la part d'un individu receveur (IR) par l'intermédiaire de l'application informatique contenue dans l'unité informatique (1) que ledit individu receveur détient, et modification en conséquence, avec le code d'identification dudit individu receveur (IR), le champ code de responsabilité (33) associé au code de reconnaissance (31) de l'emballage.

## Patentansprüche

1. System zur Beförderung von Objekten durch Einzelpersonen einer Gemeinschaft mit Einsatz von:
- Verpackungen (E), die zur Aufnahme der Gegenstände bestimmt sind, und die zumindest einen Erkennungscode (31) tragen,
- Vorrichtungen (2), die in die Verpackungen eingebettet sind, wobei jede eingebettete Vorrichtung durch einen numerischen Identifikationscode (32) identifizierbar ist;
- einer EDV-Plattform (3) mit zumindest einer EDV-Anwendung, die zum Laden durch EDV-Einheiten (1) bestimmt ist, die sich im Besitz von Einzelpersonen der Gemeinschaft befinden und Folgendes beinhalten:
- zumindest eine Datenbank (302) der Einzelpersonen der Gemeinschaft, in der zumindest ein Identifikationscode jeder Einzelpersonen aufgeführt ist, wobei sich eine Einzelperson bei der EDV-Plattform (3) identifizieren kann, indem sie ihren Identifikationscode vermittels der EDV-Anwendung überträgt, die in der EDV-Einheit (1) im Besitz der Einzelperson enthalten ist,
- zumindest eine Datenbank der Verpackungen (301), in der die Erkennungscodes aller Verpackungen und die numerischen Identifikationscodes (32) aller eingebetteten Vorrichtungen (2) aufgelistet sind, und die für jede Verpackung ein Feld für den Verantwortungscode (33) umfasst, der dazu bestimmt ist, den Identifikationscode der vorübergehend für die Verpackung verantwortlichen Einzelperson dem numerischen Identifikationscode der in der Verpackung eingebetteten Vorrichtung zuzuordnen;
wobei die EDV-Plattform (3) für Folgendes eingerichtet ist:
- Empfangen einer Anforderung zur Übertragung der Verantwortung einer übertragenden Einzelperson (IT) sowie des Identifikationscodes der empfangenden Einzelperson (IR) vermittels der EDV-Anwendung, die in der EDV-Einheit im Besitz der übertragenden Einzelperson (IT) enthalten ist;
- Senden einer Annahmeanforderung an die empfangende Einzelperson (IR) vermittels der EDV-Anwendung, die in der EDV-Einheit (1) im Besitz der empfangenden Einzelperson (IR) enthalten ist; und
- Empfangen eines Annahmesignals seitens der empfangenden Einzelperson (IR) vermittels der EDV-Anwendung, die in der EDV-Einheit im Besitz der empfangenden Einzelperson (IR) enthalten ist, und zum entsprechenden Ändern des Feldes für den Verantwortungscode (33), mit dem Identifikationscode der empfangenden Einzelperson (IR), der dem Erkennungscode (31) der Verpackung zugeordnet ist.

2. System nach Anspruch 1, **dadurch gekennzeichnet, dass** die EDV-Einheiten (1) zu folgender Gruppe gehören:
- Smartphones
- Rechner oder Tablet-Computer.

3. System nach Anspruch 1, **dadurch gekennzeichnet, dass** die Datenbank (301) der Verpackungen für jede Verpackung Zeitstempeldaten (34) einer Aktualisierung des Verantwortungscodes (33) beinhaltet.

4. System nach Anspruch 1, **dadurch gekennzeichnet, dass** die EDV-Plattform (3) so eingerichtet ist, dass sie den Identifikationscode der empfangenden Einzelperson (IR) empfängt, die ein Annahmesignal gesendet hat, und um den Verantwortungscode (33) mit dem Identifikationscode der empfangenden Einzelperson zu aktualisieren.

5. System nach Anspruch 3, **dadurch gekennzeichnet, dass** die Verpackungen (E) jeweils ein Informatikregister (35) umfassen, und dass die EDV-Plattform (3) so eingerichtet ist, dass das Informatikregister aktualisiert wird, um eine Historie der Verantwortungscodes (33) der Verpackung zu erstellen, die dem Erkennungscode (31) der Verpackung zugeordnet sind.

6. Verfahren zur Überwachung der Übernahme der Verantwortung für ein mittels eines Systems nach einem der Ansprüche 1 bis 5 beförderten Objekts, **dadurch gekennzeichnet, dass** es die folgenden Schritte umfasst:
- Aktivieren der EDV-Anwendung, die den Datenaustausch zwischen der EDV-Plattform (3) und einer EDV-Einheit (1) im Besitz einer Einzelperson ermöglicht;
- Empfangen einer Anforderung auf Übertragung der Verantwortung einer übertragenden Einzelperson (IT) vermittels der in der EDV-Einheit (1) im Besitz der übertragenden Einzelperson enthaltenen EDV-Anwendung, an eine empfangende Einzelperson (IR) vermittels der in der EDV-Einheit (1) im Besitz der empfangenden Einzelperson enthaltenen EDV-Anwendung;
- Senden einer Annahmeanforderung an die empfangende Einzelperson (IR) vermittels der in der EDV-Einheit (1) im Besitz der empfangenden Einzelperson (IR) enthaltenen EDV-Anwendung, und
- Empfangen eines Annahmesignals seitens einer empfangenden Einzelperson (IR) vermittels der in der EDV-Einheit (1) im Besitz der empfangenden Einzelperson enthaltenen EDV-Anwendung, und entsprechende Änderung des Feldes für den Verantwortungscode (33) mit dem Identifikationscode der empfangenden Einzelperson (IR), der dem Erkennungscode (31) der Verpackung zugeordnet ist.

## Claims

1. A system for routing objects by individuals of a community, implementing:
- packages (E) intended to contain the objects and bearing at least one recognition code (31),
- devices (2) embedded in the packages, each embedded device being identifiable by a digital identification code (32);
- a computer platform (3) including at least one computer application intended to be loaded by computer units (1) held by the individuals of the community, and including:
- at least one database (302) of the individuals of the community listing at least one identification code of each individual, an individual being likely to identify himself/herself to the computer platform (3) by transmitting his/her identification code via the computer application contained in the computer unit (1) held by said individual,
- at least one database (301) relating to the packages listing the recognition codes of all packages and the digital identification codes (32) of all the embedded devices (2), and comprising, for each package, a responsibility code field (33) intended to associate the identification code of the individual transiently in charge of the package with the digital identification code of the device embedded in the package;
the computer platform (3) being parameterized to:
- receive a responsibility transfer request from a transmitting individual (IT) as well as the identification code of the receiving individual (IR) via the computer application contained in the computer unit held by said transmitting individual (IT);
- issue an acceptance request to the receiving individual (IR) via the computer application contained in the computer unit (1) held by said receiving individual (IR); and
- receive an acceptance signal from the receiving individual (IR) via the computer application contained in the computer unit held by said receiving individual (IR), and change accordingly, with the identification code of said receiving individual (IR), the responsibility code field (33) associated with the recognition code (31) of the package.

2. The system according to claim 1, **characterized in that** the computer units (1) belong to the following group:
- smart phones
- computer or tablet computer.

3. The system according to claim 1, **characterized in that** the database (301) relating to the packages comprises, for each package, a timestamp information (34) of an update of the responsibility code (33).

4. The system according to claim 1, **characterized in that** the computer platform (3) is parameterized to receive the identification code from the receiving individual (IR) having emitted an acceptance signal, and to update the responsibility code (33) with said identification code of the receiving individual.

5. The system according to claim 3, **characterized in that** the packages (E) each comprise a computer register (35) and **in that** the computer platform (3) is parameterized to update the computer register in order to establish a history of the responsibility codes (33) associated with the recognition code (31) of the package.

6. A method for tracking the responsibility for a routed object using a system according to any one of claims 1 to 5, **characterized in that** it comprises the following steps:
- activating the computer application allowing the exchange of data between the computer platform (3) and a computer unit (1) held by an individual;
- receiving a responsibility transfer request from a transmitting individual (IT) via the computer application contained in the computing unit (1) held by said transmitting individual, to a receiving individual (IR) via the computer application contained in the computer unit (1) held by said receiving individual;
- issuing an acceptance request to the receiving individual (IR) via the computer application contained in the computer unit (1) held by said receiving individual (IR), and
- receiving an acceptance signal from a receiving individual (IR) via the computer application contained in the computer unit (1) held by said receiving individual, and consequently changing, with the identification code of said receiving individual (IR), the responsibility code field (33) associated with the recognition code (31) of the package.
